# EUROPÄISCHE PATENTSCHRIFT

(11) **EP 1 563 290 B1**
(45) Veröffentlichungstag und Bekanntmachung des Hinweises auf die Patenterteilung: **21.02.2007**
(21) Anmeldenummer: 03769407.2
(22) Anmeldetag: 16.10.2003
(51) Int. Cl.: G01N 29/34, G01N 29/11, G01H 1/00

(54) **QUALITÄTSPRÜFUNGSVERFAHREN MITTELS FREQUENZVERÄNDERLICHER ANREGUNGSSCHWINGUNGEN**
QUALITY CONTROL METHOD BY VARYING THE FREQUENCY OF EXCITING VIBRATIONS
PROCEDE DE CONTROLE DE QUALITE PAR VARIATION DE LA FRÉQUENCE DES VIBRATIONS EXCITANTES

(30) Priorität: 17.10.2002 DE 10248511
(43) Veröffentlichungstag der Anmeldung: 17.08.2005
(73) Patentinhaber: BSH Bosch und Siemens Hausgeräte GmbH, 81739 München (DE)
(72) Erfinder: MELZ, Matthias, 13585 Berlin (DE); MICKO, Jan, 040 01 Kosice (SK); WANG, Zhiguo, 85221 Dachau (DE)
(86) Internationale Anmeldenummer: PCT/EP2003/011501
(87) Internationale Veröffentlichungsnummer: WO 2004/036157

(56) Entgegenhaltungen:
- US-A- 4 988 979
- US-A- 6 098 022
- US-A1- 2002 046 006
- US-B1- 6 289 735
- DATABASE WPI Section EI, Week 198332 Derwent Publications Ltd., London, GB; Class S02,Page 2, AN 1983-734355 XP002279481 E. V. CHEMOHGUD, S.M. DOROSHKO, A. E. FILIPPOV: "Rotor machines vibrational diagnosis - by changing rotation frequency while vibration level is measured by converters spaced uniformly around a body" -& SU 966 518 A (RIGA CIVIL AVIAT ENGGS), 15. Oktober 1982 (1982-10-15)

## Beschreibung

Die vorliegende Erfindung betrifft ein Verfahren zur Qualitätsprüfung von Aggregaten, die mit variablen Geschwindigkeiten periodisch bewegbare Teile aufweisen. Die Bewegung eines solchen Teils, sei es eine Oszillation oder eine Vibration, kann Schwingungen anderer Teile des Aggregats anregen. Wenn die Bewegungsfrequenz des anregenden Teils mit einer Resonanzfrequenz des Aggregats übereinstimmt, kann die angeregte Schwingung beträchtliche Amplituden erreichen, und es kann zur Abstrahlung von deutlich hörbaren Geräuschen kommen. Diese Geräusche sind aus zweierlei Gründen unerwünscht. Zum einen werden sie von einer Person, die sich in Hörweite des Aggregats aufhält, im Allgemeinen als lästig empfunden, zum anderen ist eine übermäßige Geräuschentwicklung eines Aggregats, die die von baugleichen Aggregaten aus der gleichen Fertigung deutlich übersteigt, häufig ein Hinweis auf einen Fehler, der zwar nicht notwendigerweise die sofortige Unbrauchbarkeit des Aggregats mit sich bringt, der aber zumindest bei einem Aggregat, das starke Geräusche erzeugt, eine geringere Lebensdauer erwarten lässt als bei einem Aggregat, das dies nicht tut. Vor dem Einbau eines solchen Aggregats in ein komplexes Gerät ist es daher zweckmäßig, eine Qualitätsprüfung des Aggregats anhand von dessen Geräuschentwicklung bei unterschiedlichen Betriebsgeschwindigkeiten durchzuführen, um ggf. Aggregate von zweifelhafter Qualität aussondern zu können.

Um die Qualität eines Aggregats anhand seiner Geräuschentwicklung zu beurteilen, müsste man theoretisch jede Geschwindigkeit, die dessen bewegliche Teile annehmen können, einstellen und für die betreffende Geschwindigkeit resultierende Schwingungsamplituden erfassen. Die einfachste Möglichkeit, die ist zu tun, ist, die Geschwindigkeit eines beweglichen Teils innerhalb des gegebenen Bereichs der möglichen Geschwindigkeiten im Laufe der Zeit kontinuierlich zu variieren und die daraus resultierenden, im Laufe der Zeit unterschiedlichen Schwingungsamplituden zu erfassen.

Dabei ergibt sich jedoch das Problem, dass Resonanzen des Aggregats, sofern sie auftreten, stark unterschiedliche Dämpfungen und entsprechend auch unterschiedliche spektrale Breiten aufweisen können. Eine stark gedämpfte Resonanz hat im Allgemeinen eine große spektrale Breite, so dass, wenn die Geschwindigkeit des die Resonanz anregenden beweglichen Teils kontinuierlich variiert wird, die Zeitspanne, in der dessen Geschwindigkeit geeignet ist, die Resonanz anzuregen, lang genug ist, so dass die Resonanz auch beobachtet werden kann. Je geringer die Dämpfung ist, um so geringer ist die spektrale Breite einer Resonanz, und um so kürzer ist bei einer gegebenen Änderungsrate der Frequenz des beweglichen Teils die Zeitspanne, in der die Resonanz anregbar ist.

Wenn die Frequenz des beweglichen Teils mit der Resonanzfrequenz nicht exakt übereinstimmt, kommt es zu Schwebungen zwischen der Resonanz und der periodischen Bewegung des beweglichen Teils, das heißt die Resonanz wird durch die Bewegung des beweglichen Teils abwechselnd angeregt und gedämpft. Die Amplitude, mit der eine Resonanz tatsächlich beobachtet wird, wenn sie durch eine periodische Bewegung mit gleichmäßig zunehmender (oder abnehmender) Frequenz angeregt wird, hängt daher entscheidend von der relativen Phasenlage zwischen anregender Bewegung und Resonanz bei Übereinstimmung ihrer beiden Frequenzen ab. Diese Phasenlage ist jedoch eine zufällige Größe. Daher kann es vorkommen, dass insbesondere die Stärke von schwach gedämpften Resonanzen nicht richtig erfasst wird, weil die Zeitspanne, in der die Frequenz der Bewegung des anregenden Körpers sich mit dem Spektrum der Resonanz überschneidet, zu kurz ist, um die Resonanz wirksam anzuregen, und/oder weil beim Durchfahren durch den Resonanzbereich die Bewegung des Körpers und die Resonanzschwingung in einer ungünstigen Phasenlage zueinander stehen, die eine wirksame Anregung der Resonanzschwingung verhindert.

Die Zuverlässigkeit, mit der die Stärke einer Resonanz erfasst werden kann, ist also um so größer, je langsamer die Bewegungsfrequenz eines beweglichen Teils variiert wird, welches die Resonanz anregen könnte. Je langsamer aber die Frequenz variiert wird, umso länger dauert ein Prüfvorgang, und um so kleiner ist die Zahl der Aggregate, die mit einer einzelnen Prüfvorrichtung in einer gegebenen Zeitspanne untersucht werden können.

Um die Kosten der Qualitätsprüfung zu verringern, muss man daher bemüht sein, die für eine Qualitätsprüfung benötigte Zeitspanne so gering wie möglich zu halten.

US-A-4 988 979 beschreibt ein Verfahren zur Prüfung der Qualität eines Aggregats, das wenigstens ein bewegliches Teil aufweist, das innerhalb eines gegebenen Frequenzbereiches mit unterschiedlichen Frequenzen bewegbar ist und in der Lage ist, das Aggregat zu Schwingungen anzuregen, mit den Schritten:
a) Variieren der Frequenz des beweglichen Teils innerhalb eines Intervalls des Frequenzbereichs mit einer bestimmten Änderungsrate,
b) Erfassen der Schwingungsamplitude des Aggregats und Bewerten des Aggregats als brauchbar oder unbrauchbar anhand der erfassten Schwingungsamplitude.

Aufgabe der Erfindung ist, ein Verfahren zur Qualitätsprüfung zu schaffen, das eine Qualitätsprüfung in kurzer Zeit ermöglicht, und das dennoch eine sichere Erfassung und Bewertung von Resonanzen auch geringer spektraler Breite erlaubt.

Die Aufgabe wird erfindungsgemäß dadurch gelöst, dass die Frequenz des beweglichen Teils im Laufe des Verfahrens mit zwei verschiedenen Änderungsraten variiert wird, einer ersten, die für eine "oberflächliche" Untersuchung geeignet ist und eine quantitative Beurteilung der Stärke einer Resonanz nicht ermöglichen muss, und einer zweiten Änderungsrate, die niedriger als die erste ist und so eine detaillierte Untersuchung besonders interessierender Spektralbereiche ermöglicht. Die Beurteilung der Brauchbarkeit eines Aggregats erfolgt anhand der wenigstens mit der zweiten Änderungsrate erfassten Schwingungsamplitude.

Bei einer ersten Ausgestaltung des Verfahrens wird das mit der zweiten Änderungsrate detailliert zu untersuchende Frequenzintervall anhand der zuvor mit der ersten Änderungsrate erfassten Schwingungsamplitude festgelegt. Vorzugsweise geschieht dies, in dem zunächst der gesamte zu untersuchende Frequenzbereich mit der ersten Änderungsrate vollständig durchgefahren wird, wobei vorhandene Resonanzen sich im allgemeinen bereits in der so erfassten Schwingungsamplitude abzeichnen, auch wenn eine Beurteilung der Stärke der Resonanzen noch nicht möglich ist. Die auf diese Weise in kurzer Zeit ermittelten genauer zu untersuchenden Frequenzintervalle werden anschließend mit der zweiten, niedrigeren Änderungsrate untersucht, die eine sicherere Beurteilung der Stärke der Resonanz erlaubt.

Einer zweiten Ausgestaltung der Erfindung zufolge genügt es, den zu untersuchenden Frequenzbereich ein einziges Mal kontinuierlich durchzufahren, wobei die Änderungsrate jeweils innerhalb eines vorher festgelegten, genau zu untersuchenden Intervalls auf dem zweiten Wert und außerhalb eines solchen Intervalls auf dem ersten Wert gehalten wird.

Die Festlegung der mit der zweiten Änderungsrate zu untersuchenden Bereiche erfolgt in diesem Fall vorzugsweise, in dem vorab an einem mit dem zu untersuchenden Aggregat baugleichen Aggregat eine Messung der vorhandenen Resonanzfrequenzen durchgeführt wird. Da die in einer solchen Vorabmessung gefundenen Resonanzfrequenzen für eine Vielzahl von Prüfvorgängen an jeweils baugleichen Aggregaten nutzbar sind, kann diese Vorabmessung mit hohem Zeitaufwand und hoher Genauigkeit durchgeführt werden; die nachfolgenden Messungen zur Qualitätsbeurteilung der einzelnen Baugruppen benötigen demgegenüber nur kurze Zeit.

Weitere Merkmale und Vorteile des erfindungsgemäßen Verfahrens ergeben sich aus der nachfolgenden Beschreibung von Ausführungsbeispielen mit Bezug auf die beigefügten Figuren. Es zeigen:
- Fig. 1: die Schwingungsamplitude des Gehäuses eines Elektromotors als Funktion von dessen Drehzahl;
- Fig. 2: die Drehbeschleunigung des Rotors im Laufe einer Messung als Funktion der Drehzahl;
- Fig. 3: eine idealisierte Darstellung einer tatsächlich gemessenen Schwingungsamplitude als Funktion der Drehzahl in der Umgebung einer Resonanz;
- Fig. 4: eine idealisierte Kurve der Schwingungsamplitude als Funktion der Drehzahl, die im ersten Schritt eines Verfahrens gemäß einer zweiten Ausgestaltung der Erfindung erhalten werden kann.

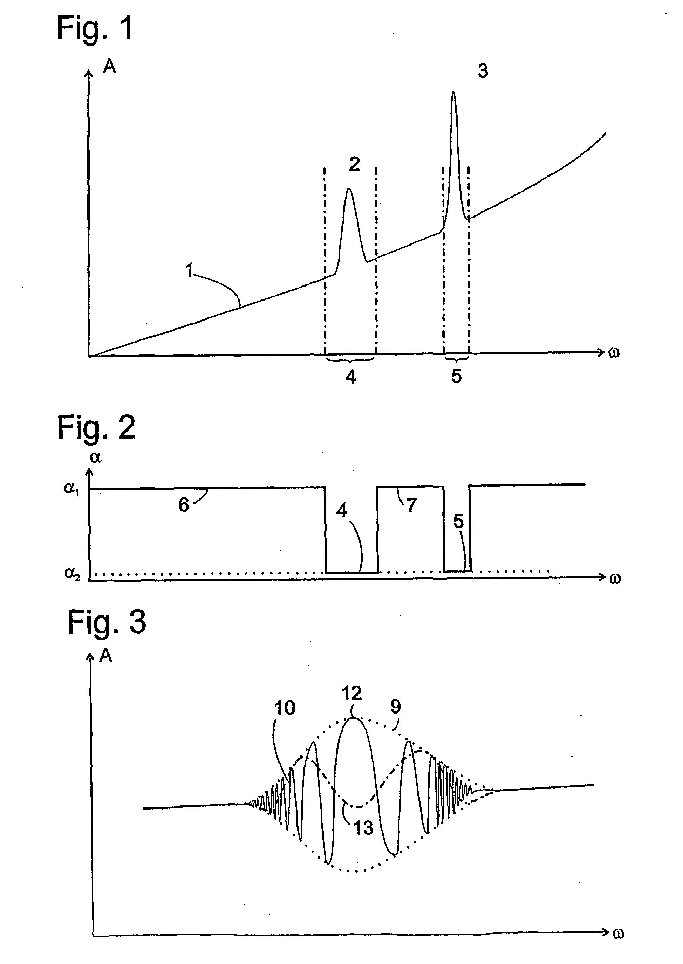

Fig. 1 ist ein Graph, der die Schwingungsamplitude A eines Gehäuses eines Elektromotors, aufgetragen in willkürlichen Einheiten an der Ordinate, als Funktion der Drehzahl ω von dessen Rotor, aufgetragen an der Abszisse, zeigt. Die in Fig. 1 gezeigte Kurve 1 ist insofern idealisiert, als ihre Punkte jeweils Messpunkten entsprechen, die bei beliebig langer Messdauer bei den einzelnen Drehzahlen ω erhalten würden. In der Praxis ist eine solche Kurve nur näherungsweise realisierbar, da solche beliebig langen Messzeiten nicht zur Verfügung stehen.

Die Kurve 1 zeigt, einem mit zunehmender Drehzahl ω anwachsenden Untergrund überlagert, zwei lokale Extrema 2, 3, die jeweils Resonanzfrequenzen des untersuchten Motors entsprechen. Wenn man mehrere Motoren einer gleichen Baureihe untersucht, stellt man im Allgemeinen fest, dass die den einzelnen Resonanzen entsprechenden Drehzahlen sich von einem Motor zum anderen nur unwesentlich unterscheiden. Die maximalen Schwingungsamplituden bei den Resonanzen, d.h. die Werte der Amplitude an den Externen 2, 3. können jedoch von Motor zu Motor stark variieren.

Basierend auf dieser Erkenntnis wird bei einer ersten Ausgestaltung des erfindungsgemäßen Verfahrens eine Messung der Resonanzfrequenzen von Motoren einer gegebenen Bauart an einem Musterexemplar oder einer begrenzten Zahl von Musterexemplaren durchgeführt. Die Zahl der untersuchten Musterexemplare ist im Allgemeinen wesentlich kleiner als die Zahl der Motoren, an denen später eine Qualitätsprüfung durchzuführen ist, und der Zeitaufwand für das Vermessen der Musterexemplare fällt daher im Verhältnis zum Zeitaufwand für die Qualitätsprüfungen der Motoren nur wenig ins Gewicht. Die Vermessung der Musterexemplare kann daher durchgeführt werden, indem deren Drehzahl im Laufe der Zeit sehr langsam gesteigert wird und währenddessen die Amplitude der Gehäuseschwingung als Funktion der Drehzahl erfasst und aufgezeichnet wird. Bei einer solchen Messung kann das Durchfahren des Drehzahlbereichs eines solchen Motors von Null bis zu einigen Tausend Umdrehungen pro Minute eine Zeitspanne von mehreren Minuten erfordern.

Aus den so erhaltenen Messkurven werden die Drehzahlintervalle, in Fig. 1 mit 4, 5 bezeichnet, ermittelt, in denen die Resonanzen des Gehäuses liegen.

Bei der anschließenden Qualitätsprüfung eines einzelnen Motors wird dessen Drehgeschwindigkeit einmal von Null bis an die obere Grenze seines zulässigen Drehzahlbereichs variiert. Die dabei angewendete Änderungsrate der Drehzahl oder die Drehbeschleunigung α ist in Fig. 2 als Funktion der Drehzahl ω gezeigt. Ein erster Drehzahlbereich 6, in dem die zuvor untersuchten Musterexemplare keine Resonanz aufgewiesen haben, wird mit einer hohen Drehbeschleunigung α₁ durchgefahren. Diese Drehbeschleunigung ist so gewählt, dass sie, wie später noch deutlicher werden wird, zwar das Vorhandensein einer Resonanz zu erkennen gestattet, nicht aber eine sichere Bewertung von deren Stärke erlaubt. Die Winkelbeschleunigung α₁ kann z.B. in einem Bereich von 5 - 20 U/s². liegen, so dass ein Drehzahlbereich von 0 - 200 U/s in einer Zeitspanne von 10 - 40 s durchgefahren werden kann.

Das auf den Bereich 6 folgende Drehzahlintervall 4 wird mit einer Winkelbeschleunigung α₂ durchgefahren, die maximal 1/10 bis ¼ von α₁ beträgt. Diese Winkelbeschleunigung α₂ ist so gewählt, dass im Laufe einer Zeitspanne, in der sich die Winkelgeschwindigkeit ω des Motors im Bereich einer Resonanz befindet, mehrere Schwebungsperioden zwischen der Drehung des Rotors und der Resonanz stattfinden können. Fig. 3 zeigt auf einer im Vergleich zu Fig. 1 gespreizten Drehzahlskala einen typischen Verlauf der Schwingungsamplitude, der beim Durchfahren des Intervalls 4 mit der niedrigen Winkelbeschleunigung α₂ erfasst werden könnte. Der Verlauf der Resonanz aus Fig. 1 ist in Fig. 3 als punktierte Linie 9 dargestellt. Wenn die Drehzahl des Motors von niedrigen Drehzahlen her kommend in den Randbereich der Resonanz eintritt, so tritt zwischen der Motordrehung und der Gehäuseresonanz eine Schwebung auf. Deren Frequenz ist im Randbereich der Resonanz hoch, was sich in Fig. 3 als ein schnelles Oszillieren der Messkurve 10 bemerkbar macht. Je näher die Drehzahl der exakten Resonanzdrehzahl kommt, um so niedriger wird die Frequenz der Schwebung, und um so breiter werden die einzelnen Perioden der Messkurve 10. Wenn die Drehzahl des Motors die der Resonanzdrehzahl überschritten hat, nimmt die Schwebungsfrequenz zum Rand der Resonanz hin wieder zu. Da die Winkelbeschleunigung α klein ist, wird, während die Winkelgeschwindigkeit ω die Resonanz durchläuft, eine große Zahl von Schwebungsperioden aufgezeichnet, darunter auch welche, die so nah an der exakten Resonanzdrehzahl liegen, dass ihre Maxima wie etwa der Punkt 12 einen guten Rückschluss auf das tatsächliche Maximum der Linie 9 und damit auf die Stärke der Resonanz zulassen. Das heißt, es wird eine reproduzierbare Messung derjenigen Schwingungsamplitude erhalten, die sich einstellt, wenn der Motor dauernd mit der Resonanzfrequenz läuft. Anhand dieser Amplitude ist eine zuverlässige Beurteilung der Qualität des Motors möglich.

Wäre die Winkelbeschleunigung α des Motors beim Durchgang durch das Intervall 4 deutlich größer, so würde sich die Zahl der beim Durchgang durch die Resonanz beobachteten Schwebungsperioden verringern, und die erhaltene Messkurve könnte z.B. die Form der strichpunktierten Kurve 13 aus Fig. 3 haben. Wie man sieht, bleiben deren Extrema deutlich unter der maximalen Amplitude der Resonanz. Wie groß die bei einem schnellen Durchlauf gemessene maximale Amplitude im Einzelfall ist, hängt von der relativen Phasenlage zwischen Motordrehung und Resonanzschwingung ab. Diese relative Phasenlage ist jedoch eine zufällige Größe, was die Amplitudenmessungen bei hoher Winkelbeschleunigung nichtreproduzierbar macht.

Wenn die Drehfrequenz des Motors das Intervall 4 verlassen hat, wird in einem anschließenden Bereich 7, in dem anhand der an den Musterexemplaren gewonnenen Messergebnisse keine Resonanz zu erwarten ist, die Winkelbeschleunigung wieder auf den hohen Wert α₁, gesetzt. In dem Intervall 5, in dem wieder eine Resonanz des Gehäuses zu erwarten ist, wird die Winkelbeschleunigung wieder auf den niedrigen zweiten Wert α₂ gesetzt, um die entsprechende Resonanz genau zu vermessen. Dieser Wechsel wiederholt sich so oft, wie Resonanzfrequenzintervalle bei den Messungen an den Musterexemplaren gefunden worden sind.

Die Breite eines Resonanzdrehzahlintervalls 4 oder 5 beträgt typischerweise ca. 100 U/min. Beim erfindungsgemäßen Verfahren wird ein solcher Bereich vorzugsweise in 5 - 7 Sek. abgefragt, was bei einer Messdauer pro Resonanz von ca. 20 µs einer Winkelbeschleunigung von ca. 2 - 4 U/s² entspricht.

Eine komplette Messung des Schwingungsverhaltens eines Motors kann somit innerhalb von 15 - 20 Sekunden abgeschlossen sein.

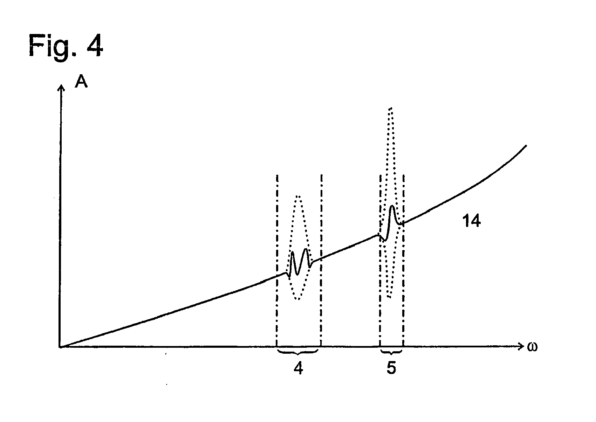

Eine zweite Ausgestaltung des Verfahrens soll anhand von Fig. 4 veranschaulicht werden. Bei dieser Ausgestaltung wird zunächst der gesamte interessierende Drehzahlbereich des Motors mit der Drehbeschleunigung α₁ durchfahren und die dabei auftretenden Schwingungsamplituden A werden aufgezeichnet. Fig. 4 zeigt als durchgezogene Linie 14 einen typischen Verlauf der dabei erhaltenen Messkurve und im Vergleich dazu die Kurve 1 aus Fig. 1, die die wahre Schwingungsamplitude im stationären Regime wiedergibt. Die beim Durchgang durch die Resonanzen mit der Winkelbeschleunigung α₁ auftretenden Schwingungsamplituden erlauben keine zuverlässige Einschätzung der Stärke einer Resonanz. Dass eine Resonanz vorhanden ist, kann aber aus der Beobachtung der für sie typischen Schwebungen in den Intervallen 4, 5 der Kurve 14 geschlossen werden. Diese Schwebungen sind messtechnisch leicht zu erfassen durch Ableiten der Messkurve 14 nach der Drehzahl ω, Bilden des Betrages der Ableitung und Suchen derjenigen Frequenzbereiche, in denen der Ableitungsbetrag einen Grenzwert überschreitet.

Wenn auf diese Weise Bereiche der Messkurve 14 wie die gezeigten Intervalle 4, 5 ermittelt worden sind, an denen sich Resonanzen befinden könnten, werden diese Intervalle anschließend mit der Winkelbeschleunigung α₂ durchgefahren. Auf diese Weise wird auch hier ein Messsignal erhalten, wie als durchgezogene Kurve 10 in Fig. 3 dargestellt, und anhand der Extrema der Kurve 10 ist eine sichere Beurteilung der Stärke der Resonanz möglich.

Der Zeitaufwand für eine einzelne Qualitätsprüfung ist mit dem Verfahren nach der zweiten Ausgestaltung geringfügig größer als mit dem ersten Verfahren, da bei der zweiten Ausgestaltung diejenigen Drehzahlintervalle 4, 5, bei denen die schnelle erste Messung einen Verdacht auf Resonanz ergeben hat, ein zweites Mal gemessen werden müssen, während bei der ersten Ausgestaltung der gesamte interessierende Frequenzbereich nur einmal, allerdings mit wechselnden Beschleunigungswerten α₁, α₂ durchgefahren wird. Der vergrößerten Messzeit steht jedoch als Vorteil gegenüber, dass keine vorherigen Kenntnisse über die mögliche Lage von Resonanzen benötigt werden, dass also vorbereitende Messungen an Musterexemplaren überflüssig sind.

## Patentansprüche

1. Verfahren zur Prüfung der Qualität eines Aggregats, das wenigstens ein bewegliches Teil aufweist, das innerhalb eines gegebenen Frequenzbereichs mit unterschiedlichen Frequenzen bewegbar ist und in der Lage ist, das Aggregat zu Schwingungen anzuregen, mit den Schritten:
a) Variieren der Frequenz des beweglichen Teils wenigstens innerhalb eines ersten Intervalls (6, 7) des Frequenzbereichs mit einer ersten Änderungsrate (α₁),
b) Variieren der Frequenz des beweglichen Teils innerhalb wenigstens eines zweiten Intervalls (4, 5) des Frequenzbereichs mit einer zweiten Änderungsrate (α₂), die niedriger als die erste ist,
c) Erfassen der Schwingungsamplitude (A) des Aggregats und Bewerten des Aggregats als brauchbar oder unbrauchbar anhand der erfassten Schwingungsamplitude (A).

2. Verfahren nach Anspruch 1, bei dem anhand der in Schritt a) erfassten Schwingungsamplitude (A) das in Schritt b) zu untersuchende zweite Frequenzintervall (4, 5) festgelegt wird.

3. Verfahren nach Anspruch 1 oder 2, bei dem in Schritt a) der gegebene Frequenzbereich mit der ersten Änderungsrate (α₁) vollständig durchgefahren und anschließend in Schritt b) das zweite Intervall (4, 5) mit der zweiten Änderungsrate (α₂) durchgefahren wird.

4. Verfahren nach Anspruch 1, bei dem der gegebene Frequenzbereich kontinuierlich durchgefahren wird, wobei die Änderungsrate (α) innerhalb jedes zweiten Intervalls (4, 5) auf dem zweiten Wert (α₂) und außerhalb davon auf dem ersten Wert (α₁) gehalten wird.

5. Verfahren nach Anspruch 1 oder 4, bei dem das wenigstens eine zweite Intervall (4, 5) vor Durchführung der Schritte a) und b) festgelegt wird.

6. Verfahren nach Anspruch 5, **dadurch gekennzeichnet, dass** das wenigstens eine zweite Intervall (4, 5) durch Erfassen der Schwingungsamplitude (A) eines mit dem zu prüfenden Aggregat baugleichen Aggregats in Abhängigkeit von der Frequenz festgelegt wird.

7. Verfahren nach einem der vorhergehenden Ansprüche, **dadurch gekennzeichnet, dass** das Aggregat eine elektrische Maschine, insbesondere ein Elektromotor, ist.

8. Verfahren nach einem der vorhergehenden Ansprüche, **dadurch gekennzeichnet, dass** die zweite Änderungsrate (α₂) weniger als ein Viertel, vorzugsweise weniger als ein Zehntel, der ersten (α₁) beträgt.

## Claims

1. Method of checking the quality of a unit having at least one movable part which is movable within a given frequency range at different frequencies and is in a position of exciting the unit to oscillate, comprising the steps of:
a) varying the frequency of the movable part at least within a first interval (6, 7) of the frequency range at a first change rate (α₁),
b) varying the frequency of the movable part within at least one second interval (4, 5) of the frequency range at a second change rate (α₂), which is lower than the first, and
c) detecting the oscillation amplitude (A) of the unit and assessing the unit as usable or unusable on the basis of the detected oscillation amplitude (A).

2. Method according to claim 1, in which the second frequency interval (4, 5) to be investigated in step b) is fixed on the basis of the oscillation amplitude (A) detected in step a).

3. Method according to claim 1 or 2, in which in the step a) the given frequency range is run through fully at the first change rate (α₁) and subsequently in step b) the second interval (4, 5) is run through at the second change rate (α₂).

4. Method according to claim 1, in which the given frequency range is continuously run through, wherein the change rate (α) within each second interval (4, 5) is kept at the second value (α₂) and outside thereof is kept at the first value (α₁).

5. Method according to claim 1 or 4, in which the at least one second interval (4, 5) is fixed before running through steps a) and b).

6. Method according to claim 5, **characterised in that** the at least one second interval (4, 5) is, for detecting the oscillation amplitude (A) of a unit constructionally identical with the unit to be checked, fixed in dependence on the frequency.

7. Method according to one of the preceding claims, **characterised in that** the unit is an electric machine, particularly an electric motor.

8. Method according to one of the preceding claims, **characterised in that** the second change rate (α₂) is less than a quarter, preferably less than a tenth, of the first (α₁).

## Revendications

1. Procédé pour le contrôle de la qualité d'un agrégat comprenant au moins une partie mobile qui peut effectuer un mouvement à différentes fréquences à l'intérieur d'une gamme de fréquences définie et est en mesure d'induire des vibrations de l'agrégat, consistant à :
a) faire varier la fréquence de la partie mobile avec une première vitesse de variation (α₁) au moins à l'intérieur d'un premier intervalle (6, 7) de la gamme de fréquences,
b) faire varier la fréquence de la partie mobile avec une seconde vitesse de variation (α₂), inférieure à la première, à l'intérieur d'au moins un second intervalle (4, 5) de la gamme de fréquences,
c) saisir l'amplitude d'oscillation (A) de l'agrégat et évaluer le caractère utilisable ou inutilisable de l'agrégat sur la base de l'amplitude d'oscillation saisie (A).

2. Procédé selon la revendication 1, dans lequel le second intervalle de fréquence (4, 5) devant être examiné dans l'étape b) est fixé sur la base de l'amplitude d'oscillation (A) saisie dans l'étape a).

3. Procédé selon la revendication 1 ou 2, dans lequel la gamme de fréquences donnée est traversée en totalité avec la première vitesse de variation (α₁) dans l'étape a) et le second intervalle (4, 5) est traversé ensuite avec la seconde vitesse de variation (α₂) dans l'étape b).

4. Procédé selon la revendication 1, dans lequel la gamme de fréquences donnée est traversée de manière continue, la vitesse de variation (α) étant maintenue sur la seconde valeur (α₂) à l'intérieur de chaque second intervalle (4, 5) et sur la première valeur (α₁) à l'extérieur de cet intervalle.

5. Procédé selon la revendication 1 ou 4, dans lequel le au moins un second intervalle (4, 5) est fixé avant l'exécution des étapes a) et b).

6. Procédé selon la revendication 5, **caractérisé en ce que** le au moins un second intervalle (4, 5) est fixé en saisissant l'amplitude d'oscillation (A), en fonction de la fréquence, d'un agrégat de construction identique à l'agrégat à contrôler.

7. Procédé selon l'une des revendications précédentes, **caractérisé en ce que** l'agrégat est une machine électrique, notamment un moteur électrique.

8. Procédé selon l'une des revendications précédentes, **caractérisé en ce que** la seconde vitesse de variation (α₂) est égale à moins d'un quart, de préférence moins d'un dixième, de la première (α₁).
